# EUROPÄISCHE PATENTSCHRIFT

(11) **EP 2 168 439 B1**
(45) Veröffentlichungstag und Bekanntmachung des Hinweises auf die Patenterteilung: **21.09.2011**
(21) Anmeldenummer: 09171642.3
(22) Anmeldetag: 29.09.2009
(51) Int. Cl.: A23L 1/00, A23G 3/36, A23G 3/50

(54) **Dragierte Brausetabletten**
Sugar-coated effervescent tablets
Tablettes effervescentes en dragées

(30) Priorität: 30.09.2008 EP 08165496
(43) Veröffentlichungstag der Anmeldung: 31.03.2010
(73) Patentinhaber: Hitschler International GmbH & Co. KG, 50939 Köln (DE)
(72) Erfinder: Hitschler, Walter, 50939, Köln (DE)
(74) Vertreter: von Kreisler Selting Werner

(56) Entgegenhaltungen:
- EP-A- 0 761 212
- WO-A-03/070224
- US-A- 4 127 645
- T.E. FURIA: "Handbook of Food Additives,Volume I" 1975, CRC PRESS , BOCA RATON , XP002512025 * Seiten 612-613 *
- RUDOLF VOIGT: "Pharmazeutische Technologie" 2006, DEUTSCHER APOTHEKER VERLAG STUTTGART , STUTTGART , XP002553701 * Seiten 299-300 * * Seiten 302,306 *
- A.TÄUFEL, L.TUNGER, M. ZOBEL: "Lebensmittellexikon" 1979, VEB, FACHBUCHVERLAG , LEIPZIG , XP002512026 * Seite 141, Absatz BRAUSEPULVER *
- B.W. MINIFIE: "Chocolate, Cocoa and Confectionary, Science and Technology" 1999, ASPEN PUBLICATION , GAITHERSBURG , XP002512027 * Seite 442 - Seite 446 *
- W.A.RITSCHEL: "Die Tablette" 1966, EDITIO CANTOR KG , AULENDORF , XP002512028 * Seite 49 * * Seite 238 - Seite 241 *
- ANONYMOUS/POWERDIDDL: "Hitschler glasierte Brause Bonbons" , [Online] August 2009 (2009-08), XP002553700 Gefunden im Internet: URL:http://www.ciao.de/Hitschler_glasierte _Brause_Bonbons__Test_8544435> [gefunden am 2009-11-02]

## Beschreibung

Die Erfindung betrifft ein Lebensmittel, insbesondere eine Süßware und Verfahren zu seiner Herstellung.

Brausen sind kohlensäurehaltige Erfrischungsgetränke, die sich von Limonaden dadurch unterscheiden, dass sie naturidentische oder künstliche Aromastoffe enthalten. Als Brausepulver wird ein Produkt bezeichnet, das man zur Herstellung einer entsprechenden Brause verwenden kann. Eines der bekanntesten Produkte ist das Produkt der Firma Frigeo, das unter der Marke Ahoi^{®} vertrieben wird. Dieses kann grundsätzlich dafür benutzt werden, zusammen mit Wasser ein Brausegetränk herzustellen.

Aufgrund der stärkeren Verbreitung bereits fertig hergestellter Limonaden und Brausen wird Brausepulver seit Jahrzehnten praktisch nur als Süßware verwendet, d.h. das Brausepulver wird trocken in den Mund genommen und durch Speichel oder Getränke zum Sprudeln gebracht.

Hauptbestandteile eines Brausepulvers sind Natriumhydrogencarbonat sowie Weinsäure oder Zitronensäure. Bei Kontakt mit Wasser entstehen hieraus Natriumtartrat bzw. Natriumcitrat und Kohlensäure, die in Wasser und CO₂ zerfällt und das Sprudeln hervorruft. Bei Brausepulvern ist es üblich, dass diese farblich an die Geschmacksrichtung angepasst werden, also beispielsweise grüne Farbstoffe für Waldmeistergeschmack, rote Farbstoffe für Himbeer- und Erdbeergeschmack, etc.

Es ist auch bekannt, Brausepulver zu verpressen, um hierdurch eine Art sprudelnden Lutschbonbon zu erhalten. Das Produkt wird auch angeboten, indem es mit einem Stiel zusammen verpresst wird, um einen sprudelnden Lutscher zu erhalten.

US 4,127,645 offenbart ein Zahnreinigungsmittel oder eine Sübware in Form einer Tablette mit einem schäumenden Kern und einer äußeren Hülle, die ein Zuckeralkohol wie Sorbitol enthält. Der Kern beträgt dabei 20 bis 80% des Gesamtgewichts und die Beschichtung beträgt entsprechend 80 bis 20 Gew.-%. Sie wird als trockene Beschichtung aufgepresst.

Im Bereich der Süßwaren erwartet der Verbraucher regelmäßige Veränderungen der Produkte, um neue und überraschende Geschmackserlebnisse zu erreichen. Bei Süßwaren spielt auch das optische Erscheinungsbild eine große Rolle. Es besteht somit weiterhin Bedarf nach Produkten mit Veränderungen im Geschmacks- oder Erscheinungsbild.

Die vorliegende Erfindung hat sich die Aufgabe gestellt, solche Produkte bereitzustellen.

Gelöst wird die Aufgabe durch ein Lebensmittel mit
a) einem verpressten Kern enthaltend
   - Carbonate, ausgewählt aus der Gruppe bestehend aus Alkalicarbonaten, Alkalihydrogencarbonaten, Erdalkalicarbonaten, Erdalkalihydrogencarbonaten und Mischungen davon
   - organische, zum Verzehr geeignete Säuren,
   - einen Aromastoff
b) eine Filmhülle enthaltend mindestens einen Filmbildner und einen zum Verzehr geeigneten Farbstoff.

Das Lebensmittel umfasst somit zum einen verpressten Kern, der die für Brausepulver üblichen Carbonate und organischen Säuren enthält, sowie einen Aromastoff. Diese Substanzen sind zu einem Kern verpresst. Bei Kontakt des Kerns mit Speichel kommt es zu der Reaktion der Carbonate mit den Säuren und zu dem erwünschten Schäumen. Die Filmhülle umgibt den Kern und enthält einen Farbstoff. Hierdurch werden unter anderem folgende Effekte erreicht:

Erstens kommt es durch die Filmhülle zu einer gewissen Verzögerung beim in Kontakt kommen des Speichels mit dem Kern, das heißt, zunächst entsteht der Geschmackseindruck eines "normalen" Bonbons, und erst mit kurzer Zeitverzögerung beginnt das typische Sprudeln eines Brausepulvers.

Zweitens können neue Farbgestaltungen erreicht werden. Bei klassischem Brausepulver in nicht-verpresster oder verpresster Form wird der Farbstoff mit den Carbonaten und den Säuren vermischt. Die Menge an Farbstoff, die in ein Brausepulver eingebracht werden kann, ist limitiert, auf der einen Seite durch technische Bedingungen, in vielen Ländern aber auch durch gesetzliche Bestimmungen für den Maximalgehalt von Farbstoffen in Lebensmitteln. Dies bedeutet, dass typischerweise Brausepulver nur eine leichte Einfärbung erreichen, häufig in einer mehr oder weniger "gesprenkelten" Farbgestaltung mit einem relativ blassen Erscheinungsbild. Durch den erfindungsgemäßen Aufbau wird der Farbstoff in der Hülle konzentriert, das heißt, das Brausepulver kann farbstofffrei eingesetzt werden. Durch die hohen Konzentrationen an Farbstoff in der Hülle können intensive leuchtende Farben erreicht werden. Insgesamt lässt sich damit im Regelfall sogar weniger Farbstoff einsetzen als bei üblichen Brausepulvern. Manche Farbstoffe werden als gesundheitlich nicht unbedenklich betrachtet, daher ist es grundsätzlich wünschenswert, interessante Farbgestaltung mit möglichst wenig Farbstoff zu erreichen.

Geeignete Carbonate für den verpressten Kern sind insbesondere Natriumcarbonat, Natriumhydrogencarbonat, Calciumcarbonat, Magnesiumcarbonat oder Mischungen davon.

Als organische Säuren können die organischen Säuren eingesetzt werden, die auch bisher für Brausepulver eingesetzt wurden. Typische geeignete Säuren sind Äpfelsäure, Weinsäure, Zitronensäure, Folsäure, Ascorbinsäure, und Mischungen davon.

Ein Inhaltsstoff, den viele Brausepulver zusätzlich enthalten ist Zucker. Durch den Gehalt an organischen Säuren können die Produkte ausgesprochen sauer sein. Dieses Geschmackserlebnis kann durch den Zusatz von Zucker und/oder Zuckeralkoholen wie Sorbit, Erythrit oder Maltodextrin zum Kern gemildert werden. Dies ist insbesondere für Kinder wünschenswert. Geeignete Zucker sind insbesondere Dextrose und Saccharose. Um die gewünschte Bruchfestigkeit zu erreichen, können gegebenenfalls auch andere bekannte Hilfsmittel wie Stärke oder Gelatine oder PVP eingesetzt werden.

Eine typische Zusammensetzung des verpressten Kerns liegt im Bereich von
- 6 bis 20 Gew-% Carbonate,
- 5 bis 20 Gew.-% organische, zum Verzehr geeignete Säuren,
- 60 bis 80 Gew.-% Zucker.

Der Kern kann verschiedenste äußere Formen annehmen, beispielsweise Stäbchen, Herzen oder Sterne. Weitere Möglichkeiten sind z.B. Ringe und zylindrische Formen mit tierischen Aufwölbungen wie - Elefanten, Delphine, etc.

Als Filmbilder eignen sich typische Filmbildner, die zum Filmdragieren eingesetzt werden können. Ein besonders bevorzugter Filmbildner ist eine Mischung enthaltend hydrophobe Hydroxymethylpropylcellulose und Titandioxid. Hydroxypropylmethylcellulose ist als E464 zugelassen; es existieren Varianten mit unterschiedlichem Grad an Substitution von Methyl und Hydroxypropyl. Das Titandioxid wirkt dabei als Glanzmittel. Grundsätzlich als Filmbildner geeignete Materialien sind Eudragit^{®}, PVP (Polyvinylpyrrolidon), Polysaccharide wie Gummi arabicum sowie Cellulosederivate wie Hydroxyethylcellulose, Hydroxymethylcellulose und Carboxymethylcellulose.

Als Aromastoffe eignen sich typische Brausepulveraromen, wie Orange, Apfel, Cola, Zitrone, Erdbeere, Himbeere und Waldmeister. Typischerweise wird der Farbstoff dann passend zur Geschmacksrichtung gewählt, das heißt, ein Pulver mit einem Waldmeistergeschmack würde mit einem grünen Farbstoff kombiniert, ein Produkt mit Erdbeergeschmack mit einem roten Farbstoff, etc.

Der Farbstoff kann ausgewählt werden aus den im jeweiligen Land zugelassenen Lebensmittelfarbstoffen, beispielsweise Azofarbstoffen. Bevorzugt werden jedoch natürliche Farbstoffe eingesetzt, wie beispielsweise Betacarotin, Zeaxanthin, Lutein oder farbige Lebensmittelextrakte, wie Curcuma-Wurzelextrakt, Paprika-Konzentrat und schwarzes Karottensaftkonzentrat.

Der Kern und/oder die Hülle können natürlich weitere Hilfsstoffe enthalten. Typische Hilfsstoffe sind Tablettierhilfsmittel, Zucker, Zuckeralkohole, Süßstoffe, Gleitmittel, Glanzmittel, Aromen und Farbstoffe.

Das erfindungsgemäße Lebensmittel hat eine Filmhülle, das heißt, im Gegensatz zu einer Dragierhülle, wie sie beispielsweise bei einem Kaugummi vorgesehen ist, erfolgt nur eine Beschichtung mit einem dünnen Film. Typischerweise liegt das Gewicht der Hülle nur bei 0,5 bis 3 Gew-%, bevorzugt 0,5 bis 2 des Gesamtgewichts des Lebensmittels, anhängig von Form und Größe des Kerns. Typische Stärken entsprechender Filmhüllen liegen bei 40 bis 200 µm. In Abhängigkeit der Zusammensetzung des Kerns kann die Hülle an den Kern angepasst werden, indem entsprechend Aroma und Farbstoff der Filmhülle verändert werden.

Erfindungsgemäß weist das erfindungsgemäße Lebensmittel also eine dünne Filmbeschichtung als Hülle auf, die nicht durch trockenes Verpressen, sondern durch Aufsprühen eines Films erhalten wird. Obwohl die Lösung flüssig aufgebracht wird, kann unter Einhaltung der beschriebenen Verfahrensbedingungen überraschenderweise erreicht werden, dass der Kern unzersetzt bleibt und das Beschichten ohne Zersetzen erfolgt.

Typische Produktgewichte liegen etwa zwischen 1 und 5 g.

Das Brausepulver im Kern wird bevorzugt auf eine Bruchfestigkeit von 145-180 N verpresst, gemessen mit einem Erweka-Bruchfestigkeitstester. Eine gewisse Mindestfestigkeit ist erforderlich, damit die vorgepressten Kerne die Behandlung im Dragierkessel überstehen. Eine zu hohe Bruchfestigkeit ist für ein Lebensmittel nachteilig, weil das Produkt dann nicht zerbissen werden kann. Eine zu niedrige Bruchfestigkeit führt ggf. auch zu Verklebungen während des Dragierprozesses. Die Oberfläche scheint nicht genügend geschlossen zu sein.

Gegenstand der Erfindung ist auch ein Verfahren zur Herstellung des erfindungsgemäßen Lebensmittels, umfassend die Schritte
- Vermischen der Inhaltsstoffe für den Kern,
- Verpressen der Inhaltsstoffe,
- Filmdragieren.

Bevorzugt erfolgt das Filmdragieren mit einer wässrigen Lösung, d.h. einer Lösung, die mindestens 50 Gew.-%, bevorzugt mindestens 70, 75 oder 80 Gew.-% Wasser enthält.

Klassische Dragierverfahren nutzen beispielsweise eine wässrige Zuckerlösung zum Dragieren, die später getrocknet wird. Bei Kontakt mit einer wässrigen Zuckerlösung würde der vorgepresste Kern sofort unter Abspaltung von CO₂ reagieren, sodass kein gebrauchsfähiges Produkt erhalten werden könnte.

Der Fachmann hätte erwartet, dass auch Filmdragieren entsprechender Produkte zu einer Freisetzung von CO₂ führt. Überraschenderweise ist es jedoch möglich, zu einem ebenmäßig beschichteten Produkt zu gelangen, wenn das Filmdragieren mit einer gewissen Vorsicht durchgeführt wird.

Es hat sich als besonders geeignet erwiesen, wenn die Herstellung, d.h. das Verpressen und das Filmdragieren, in konditionierten Räumen durchgeführt wird. Die relative Luftfeuchtigkeit sollte bevorzugt unter 20% betragen, am besten etwa 15%, bei einer Raumtemperatur von 25 bis 30°C.

Für das Verpressen wird die Pressform bevorzugt gekühlt, Temperaturen im Bereich von etwa 35/36°C haben sich als besonders geeignet erwiesen. Nach dem Verpressen erfolgt die Überführung der Kerne in den Dragierkessel. Dort werden sie über einen längeren Zeitraum mit geringen Mengen einer Lösung überzogen, die anschließend die Filmhülle bildet.

Die Erfindung wird durch die nachfolgenden Beispiele näher erläutert.

### Beispiel 1: Herstellung der verpressten Kerne

Es wurde eine Mischung des Kernmaterials erstellt aus,
- 42 Gew-% Dextrose, 27,5 Gew-% Komprizucker (Saccharose),
- 12,6 Gew-% Sorbit,
- 8,5 Gew-% Zitronensäure,
- 8,5 Gew-% Natriumhydrogencarbonat,
- 0,6 Gew-% Magnesiumstearat,
- 0,25 Gew% Himbeeraroma.

Die Mischung wurde homogen vermischt und in eine übliche Tablettenpresse gegeben, auf der das Produkt verpresst wurde. Beim Verpressen entsteht automatisch Wärme, die durch entsprechende Kühlung ( Luftzuführung in den Pressraum der Maschine ) auf etwa 35-38° konstant gehalten wurde. Die fertig vorgepressten Tabletten wurden mit Hilfe eines Abstreifers auf ein Band geschoben, auf ein Sieb transportiert, entstaubt, und in einen Vorlagebehälter für den Dragiervorgang transportiert.

### Beispiel 2

42% Dextrose, 26,65% Komprizucker,10,12 % Sorbitol, 4,1% Maltodextrin, 8,0% Citronensäure, 8,5% Natriumhydrogencarbonat, 0,6% Magnesiumstearat,0,25% Orangenaroma wurden vermischt und wie im Beispiel 1 verpresst.

### Beispiel 3

42% Dextrose, 24% Komprizucker, 10,8 % Sorbit,5,7 % Erythritol 5,7&, 8,0% Äpfelsäure, 8,5% Natriumbicarbonat,0,8 % Magnesiumstearat, 0,2 % Apfelaroma wurden vermischt und wie im Beispiel 1 verpresst.

### Beispiel 4: Dragieren der Kerne

Bei dem im Einsatz befindlichen Dragierkessel konnten 40 kg der Kerne eingeführt werden, die bei 50°C gerührt wurden. Anschließend wurde in einem feinen Strahl eine wässrige, rote (himbeerfarbene) Lösung aufgesprüht.

Eingesetzt wurden 2,4 kg einer Filmlösung. Diese wurde hergestellt durch Vermischen von 85,7 Gew-% Wasser mit 10,6 Gew-% Hydroxymethylpropylcellulose und 3,7 Gew-% Titandioxid, die unter starkem Rühren zu einer homogenen Emulsion verarbeitet wurde.

Von dieser Lösung wurden zwei Kilo entnommen, die mit 0,005 kg Himbeeraroma, 0,04 kg Weinsäure, 0,166 kg Saccharose und 0,0025 kg einer Farbmischung enthaltend E124/E129 in 0,2 kg Wasser vermischt wurde. Nach der Verdüsung der Filmlösung wurden die Dragees nachgetrocknet, aus dem Kessel entnommen und konnten in Produktverpackungen abgefüllt werden.

## Patentansprüche

1. Lebensmittel mit
a) einem verpressten Kern enthaltend
- Carbonate, ausgewählt aus der Gruppe bestehend aus Alkalicarbonaten, Alkalihydrogencarbonaten, Erdalkalicarbonaten, Erdalkalihydrogencarbonaten und Mischungen davon
- organische, zum Verzehr geeignete Säuren,
- einen Aromastoff
b) eine Filmhülle enthaltend mindestens einen Filmbildner und einen zum Verzehr geeigneten Farbstoff,
wobei das Gewicht der Filmhülle 0,5 bis 3 Gew.-% des Gesamtgewichtes des Lebensmittels ausmacht.

2. Lebensmittel nach Anspruch 1, **dadurch gekennzeichnet, dass** die Carbonate ausgewählt werden aus Natriumcarbonat, Natriumhydrogencarbonat, Calciumcarbonat, Magnesiumcarbonat oder Mischungen davon.

3. Lebensmittel nach Anspruch 1 oder 2, **dadurch gekennzeichnet, dass** die organischen Säuren ausgewählt werden aus Äpfelsäure, Weinsäure, Zitronensäure, Folsäure, Ascorbinsäure, und Mischungen davon.

4. Lebensmittel nach mindestens einem der Ansprüche 1 bis 3, **dadurch gekennzeichnet, dass** der Kern zusätzlich Zucker, insbesondere Dextrose enthält.

5. Lebensmittel nach mindestens einem der Ansprüche 1 bis 4, **dadurch gekennzeichnet, dass** die Zusammensetzung des verpressten Kerns wie folgt ist:
- 6 bis 20 Gew.-% Carbonate
- 5 bis 20 Gew.-% organische, zum Verzehr geeignete Säuren
- 60 bis 80 Gew.-% Zucker.

6. Lebensmittel nach mindestens einem der Ansprüche 1 bis 5, **dadurch gekennzeichnet, dass** der Filmbildner hydrophobe Hydroxymethylpropylcellulose und Titandioxid enthält.

7. Lebensmittel nach mindestens einem der Ansprüche 1 bis 6, **dadurch gekennzeichnet, dass** der Aromastoff ausgewählt wird aus Aromen für Orange, Apfel, Cola, Zitrone, Erdbeere, Himbeere und Waldmeister.

8. Lebensmittel nach mindestens einem der Ansprüche 1 bis 7, **dadurch gekennzeichnet, dass** der Farbstoff ausgewählt wird aus Azofarbstoffen, Lebensmittelfarben wie Betacarotin, Zeaxanthin, Lutein oder farbigen Lebensmittelextrakten, wie Curcuma-Wurzelextrakt, Paprika-Konzentrat und schwarzem Karottensaftkonzentrat.

9. Lebensmittel nach mindestens einem der Ansprüche 1 bis 8, **dadurch gekennzeichnet, dass** Kern und/oder Hülle weitere Hilfsstoffe wie Tablettierhilfsmittel, Stärke, Gelatine, Polyvinylpyrrolidon, Zucker, Zuckeralkohole Süßstoffe, Gleitmittel, Glanzmittel, Aromen und Farbstoffe enthalten.

10. Lebensmittel nach einem der Ansprüche 1 bis 9, **dadurch gekennzeichnet, dass** die Filmhülle aus einer wässrigen Filmbeschichtung erhalten wird.

11. Lebensmittel nach mindestens einem der Ansprüche 1 bis 10, **dadurch gekennzeichnet, dass** der verpresste Kern eine Bruchfestigkeit von 145-180 N aufweist.

12. Verfahren zur Herstellung eines Lebensmittels nach einem der Ansprüche 1 bis 11 umfassend die Schritte:
- Vermischen der Inhaltsstoffe für den Kern,
- Verpressen der Inhaltsstoffe,
- Filmdragieren.

13. Verfahren nach Anspruch 12, **dadurch gekennzeichnet, dass** das Filmdragieren mit einer wässrigen Lösung erfolgt.

14. Verfahren nach Anspruch 12 oder 13, **dadurch gekennzeichnet, dass** das Verfahren in konditionierten Räumen durchgeführt wird, bei denen die relative Luftfeuchtigkeit unter 20% liegt.

15. Verfahren nach mindestens einem der Ansprüche 12 bis 14, **dadurch gekennzeichnet, dass** das Verpressen bei 32-38°C erfolgt.

## Claims

1. A food product comprising
a) a compressed core containing
- carbonates selected from the group consisting of alkali carbonates, alkali hydrogencarbonates, alkaline earth carbonates, alkaline earth hydrogencarbonates, and mixtures thereof;
- edible organic acids;
- a flavoring agent;
b) a film coat containing at least one film-forming agent and an edible colorant;
wherein the weight of the film coat is from 0.5 to 3% by weight of the total weight of the food.

2. The food product according to claim 1, **characterized in that** said carbonates are selected from sodium carbonate, sodium hydrogencarbonate, calcium carbonate, magnesium carbonate, or mixtures thereof.

3. The food product according to claim 1 or 2, **characterized in that** said organic acids are selected from malic acid, tartaric acid, citric acid, folic acid, ascorbic acid, and mixtures thereof.

4. The food product according to at least one of claims 1 to 3, **characterized in that** said core additionally contains sugar, especially dextrose.

5. The food product according to at least one of claims 1 to 4, **characterized in that** the composition of said compressed core is as follows:
- from 6 to 20% by weight of carbonates;
- from 5 to 20% by weight of edible organic acids;
- from 60 to 80% by weight of sugar.

6. The food product according to at least one of claims 1 to 5, **characterized in that** said film-forming agent contains hydrophobic hydroxymethylpropylcellulose and titanium dioxide.

7. The food product according to at least one of claims 1 to 6, **characterized in that** said flavoring agent is selected from flavors for orange, apple, cola, lemon, strawberry, raspberry and woodruff.

8. The food product according to at least one of claims 1 to 7, **characterized in that** said colorant is selected from azo colorants, food colorants, such as beta-carotene, zeaxanthin, lutein, or colored food extracts, such as turmeric root extract, bell pepper concentrate and black carrot juice concentrate.

9. The food product according to at least one of claims 1 to 8, **characterized in that** said core and/or coat contain further auxiliaries, such as tabletting aids, starch, gelatin, polyvinylpyrrolidone, sugar, sugar alcohols, artificial sweeteners, lubricants, glazing agents, flavors and colorants.

10. The food product according to any of claims 1 to 9, **characterized in that** said film coat is obtained from an aqueous film coating composition.

11. The food product according to at least one of claims 1 to 10, **characterized in that** the compressed core has a breaking strength of from 145 to 180 N.

12. A process for preparing a food product according to any of claims 1 to 11, comprising the steps of:
- mixing the ingredients for the core;
- compressing the ingredients;
- coating the compressed core with a film.

13. The process according to claim 12, **characterized in that** said step of coating the compressed core with a film is effected by using an aqueous solution.

14. The process according to claim 12 or 13, **characterized in that** said process is performed in conditioned rooms in which the relative atmospheric humidity is below 20%.

15. The process according to at least one of claims 12 to 14, **characterized in that** said compressing is effected at 32-38 °C.

## Revendications

1. Produit alimentaire comprenant :
a) un noyau comprimé contenant
- des carbonates, choisis dans le groupe constitué des carbonates alcalins, des bicarbonates alcalins, des carbonates alcalinoterreux, des bicarbonates alcalinoterreux et des mélanges de ceux-ci,
- des acides organiques propres à la consommation,
- une substance aromatique,
b) une enveloppe pelliculaire contenant au moins un agent pelliculant et un colorant propre à la consommation,
le poids de l'enveloppe pelliculaire étant de 0,5 à 3% en poids du poids total du produit alimentaire.

2. Produit alimentaire selon la revendication 1, **caractérisé en ce que** les carbonates sont choisis parmi le carbonate de sodium, le bicarbonate de sodium, le carbonate de calcium, le carbonate de magnésium ou des mélanges de ceux-ci.

3. Produit alimentaire selon la revendication 1 ou 2, **caractérisé en ce que** les acides organiques sont choisis parmi l'acide malique, l'acide tartrique, l'acide citrique, l'acide folique, l'acide ascorbique, et des mélanges de ceux-ci.

4. Produit alimentaire selon au moins une des revendications 1 à 3, **caractérisé en ce que** le noyau contient en plus un sucre, notamment du dextrose.

5. Produit alimentaire selon au moins une des revendications 1 à 4, **caractérisé en ce que** la composition du noyau comprimé est la suivante :
- 6 à 20% en poids de carbonates,
- 5 à 20% en poids d'acides organiques propres à la consommation,
- 60 à 80% en poids de sucres.

6. Produit alimentaire selon au moins une des revendications 1 à 5, **caractérisé en ce que** l'agent pelliculant contient de l'hydroxyméthylpropylcellulose hydrophobe et du dioxyde de titane.

7. Produit alimentaire selon au moins une des revendications 1 à 6, **caractérisé en ce que** la substance aromatique est choisie parmi les aromes d'orange, de pomme, de cola, de citron, de fraise, de framboise et de reine des bois.

8. Produit alimentaire selon au moins une des revendications 1 à 7, **caractérisé en ce que** le colorant est choisi parmi les colorants azoïques, les colorants alimentaires comme la bétacarotène, la zéaxanthine, la lutéine ou les extraits de produits alimentaires colorants, comme l'extrait de racine de curcuma, le concentré de paprika et du concentré de jus de carotte noire.

9. Produit alimentaire selon au moins une des revendications 1 à 8, **caractérisé en ce que** le noyau et/ou l'enveloppe contiennent d'autres agents accessoires tels que des agents accessoires de préformage, l'amidon, la gélatine, la polyvinylpyrrolidone, les sucres, les alcools de sucre, la saccharine, les lubrifiants, les agents brillants, les aromes et les colorants.

10. Produit alimentaire selon l'une des revendications 1 à 9, **caractérisé en ce que** l'enveloppe pelliculaire est obtenue à partir d'un revêtement pelliculaire aqueux.

11. Produit alimentaire selon au moins une des revendications 1 à 10, **caractérisé en ce que** le noyau comprimé présente une résistance à la rupture de 145 à 180 N.

12. Procédé de fabrication d'un produit alimentaire selon l'une des revendications 1 à 11, ledit procédé comportant les étapes consistant à :
- mélanger les composants du noyau,
- comprimer les composants,
- réaliser des dragées pelliculées.

13. Procédé selon la revendication 12, **caractérisé en ce que** les dragées pelliculées sont réalisées avec une solution aqueuse.

14. Procédé selon la revendication 12 ou 13, **caractérisé en ce que** le procédé est mis en oeuvre dans des pièces conditionnées dans lesquelles l'humidité relative de l'air est inférieure à 20%.

15. Procédé selon au moins une des revendications 12 à 14, **caractérisé en ce que** la compression est effectuée à 32-38°C.
